# EUROPEAN PATENT APPLICATION

(11) **EP 1 496 651 A1**
(43) Date of publication of application: **12.01.2005**
(21) Application number: 03725656.7
(22) Date of filing: 24.04.2003
(51) Int. Cl.: H04L 12/56, H04B 7/26, H04Q 7/38

(54) **COMMUNICATION SYSTEM, SERVER DEVICE USED IN COMMUNICATION SYSTEM, COMMUNICATION DEVICE, AND PROGRAM FOR EXECUTING COMMUNICATION METHOD OF THE COMMUNICATION DEVICE**

(30) Priority: 26.04.2002 JP 2002126829
(71) Applicant: MATSUSHITA ELECTRIC INDUSTRIAL CO., LTD., Kadoma-shi, Osaka 571-8501 (JP)
(72) Inventor: MAEKAWA, Hajime, Osaka-shi, Osaka 547-0005 (JP); IWAMOTO, Koji, Nara-shi, Nara 631-0034 (JP); IKEDA, Takumi, Kobe-shi, Hyogo 651-0053 (JP); NISHII, Yoshimi, Takatsuki-shi, Osaka 569-0022 (JP)
(74) Representative: Balsters, Robert
(86) International application number: PCT/JP2003/005242
(87) International publication number: WO 2003/092228

(57) **Abstract**

A communication system including a communication device and a server device. In a server device, a communication information memory stores unique information that is information for identifying a second communication device and communication destination information that is information for communicating with the second communication device. In a first communication device, a first server device identification information memory stores server device identification information that is information for accessing to a server device. An input receiver receives the input of unique information. When the input receiver receives the input of unique information, a first communication destination information acquisition unit accesses to the server device identified by the server device identification information, and acquires communication destination information corresponding to the unique information from server device. A first communication unit communicates with a second communication device by using the communication destination information.

## Description

### TECHNICAL FIELD

The present invention relates to a communication system and the like including mobile terminals.

### BACKGROUND ART

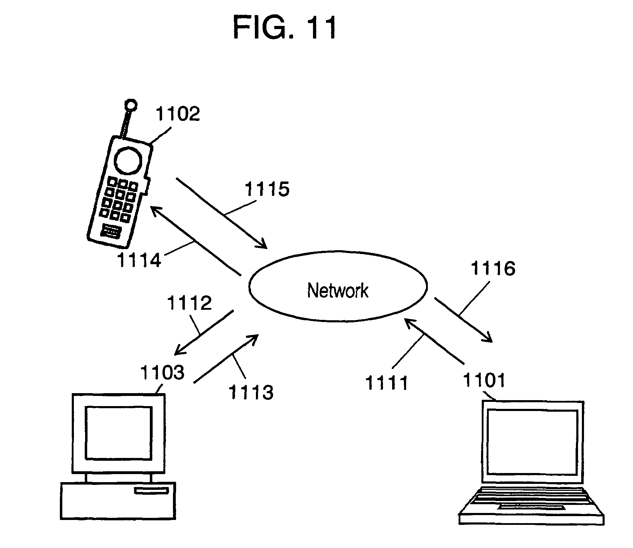

Mobile IP (Internet Protocol) is known as the first communication technology in a conventional communication system including mobile terminals. This technology will be described by using the communication system of Fig. 11.

The communication system of Fig. 11 includes fixed terminal 1101, mobile terminal 1102, and server device 1103.

In this communication system, suppose a phone call is made from fixed terminal 1101 to mobile terminal 1102 by using IP address.

When mobile terminal 1102 moves to a space that a different network is used, fixed terminal 1101 is usually unable to communicate because it has no information of IP address of mobile terminal 1102. However, server device 1103 has a function of getting the information of IP address even when mobile terminal 1102 moves to the space that the different network is used.

Accordingly, fixed terminal 1101 transmits a communication packet to server device 1103 via path 1111 and path 1112 in Fig. 11 to communicate with mobile terminal 1102.

Next, the communication packet is transmitted from server device 1103 to mobile terminal 1102 via path 1113 and path 1114 in Fig. 11.

Further, mobile terminal 1102 directly transmits a communication packet to fixed terminal 1101 via path 1115 and path 1116 in Fig. 11.

In Fig. 11, the function of controlling the paths in server device 1103 is called a home agent. the function of controlling the paths in mobile terminal 1102 is called a foreign agent. Also, an exclusive line is usually employed for the network between path 1115 and path 1116 in Fig. 11.

Next, the second communication technology in a communication system including mobile terminals will be described in the following.

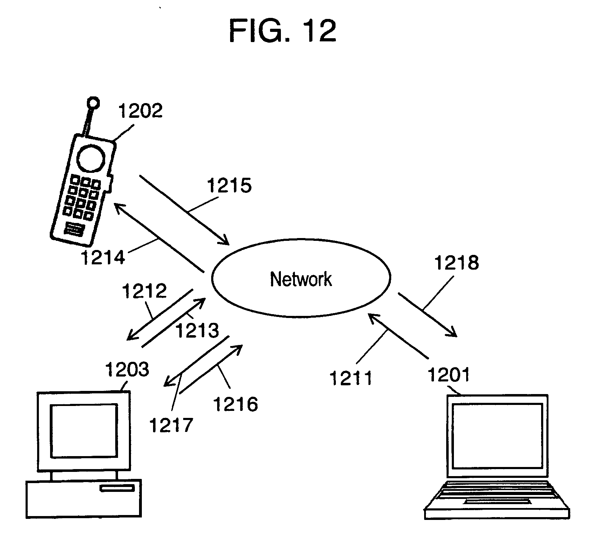

A communication system using this communication technology is shown in Fig. 12.

The communication system of Fig. 12 includes fixed terminal 1201, mobile terminal 1202, and server device 1203. In this communication system, suppose a phone call is made from fixed terminal 1201 to mobile terminal 1202 by using IP address.

When mobile terminal 1202 moves to a space on a different network, fixed terminal 1201 is usually unable to communicate because it has no information of IP address of mobile terminal 1202. However, server device 1203 has a function of getting the information of IP address even when mobile terminal 1202 moves to a space of different network.

Fixed terminal 1201 transmits a communication packet to server device 1203 via path 1211 and path 1212 in Fig. 12 communicate with mobile terminal 1202.

Next, the communication packet is transmitted from server device 1203 to mobile terminal 1202 via path 1213 and path 1214 in Fig. 12.

Next, mobile terminal 1202 transmits a communication packet to server device 1203 via path 1215 and path 1216 in Fig. 12. Further, server device 1203 transmits the communication packet to fixed terminal 1201 via path 1217 and path 1218 in Fig. 12. In the second conventional technology, server device 1202 maintains the IP address of fixed terminal 1201 and mobile terminal 1202.

Next, the third communication technology in a communication system including mobile terminals will be described. The third communication technology is a technology for communication between a mobile terminal and a mobile terminal.

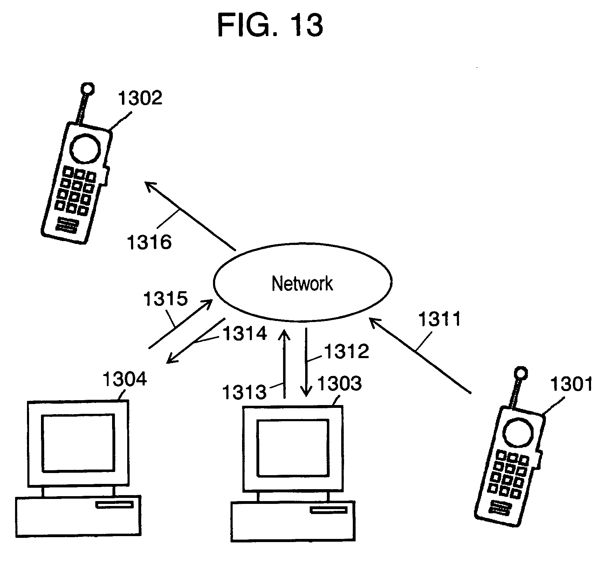

A communication system using this communication technology is shown in Fig. 13.

This communication system includes first mobile terminal 1301, second mobile terminal 1302, first server device 1303, and second server device 1304.

In this communication system, suppose a phone call is made from first mobile terminal 1301 to second mobile terminal 1302 by using IP address.

The communication packet transmitted from first mobile terminal 1301 is transmitted to first server device 1303 via path 1311 and path 1312 in Fig. 13.

Next, the communication packet is transmitted from first server device 1303 to second server device 1304 via path 1313 and path 1314 in Fig. 13. Next, the communication packet is transmitted from second server device 1304 to second mobile terminal 1302 via path 1315 and path 1316 in Fig. 13.

Thus, the communication packet is transmitted from first mobile terminal 1301 to second mobile terminal 1302.

In communication packet transmission from second mobile terminal 1302 to first mobile terminal 1301, the communication packet follows the paths in the opposite direction to the above.

In the third conventional technology, first server device 1303 serves to control the IP address of second mobile terminal 1302, and second server device 1304 serves to control the IP address of first mobile terminal 1301.

First server device 1303 and second server device 1304 may be one unit (server device).

In such a case as described above, a copy of communication packet is generated in the server device, causing the server load to be increased.

Thus, in a communication system based on the conventional technology, the server device accesses the network every communication made by each terminal. Accordingly, the communication traffic between server device and network will become massive, and it may cause congestion.

### SUMMARY OF THE INVENTION

The communication system of the present invention includes a first communication device, a second communication device for communicating with the first communication device, and a server device which accesses the first communication device.

In the server device, the communication information memory stores unique information that is information for identifying the second communication device and communication destination information that is information for establishing communication with the second communication device.

In the first communication device, the first server device identification information memory stores server device identification information that is information for accessing the server device. The input receiver receives the input of unique information. When the input receiver receives the input of unique information, the first communication destination information acquisition unit accesses the server device identified by the server device identification information and obtains the communication destination information corresponding to the unique information from the server device. The first communication unit uses the communication destination information to communicate with the second communication device without using the server device.

In the communication device of the present invention, the server device identification information memory stores server device identification information that is information for accessing the server device. The input receiver receives the input of unique information. The communication destination information acquisition unit accesses the server device identified by server device identification information when the input receiver receives the input of unique information, and obtains communication destination information corresponding to the unique information from the server device. The communication unit uses the communication destination information to communicate with another communication device without using the server device.

In the server device of the present invention, the communication unit communicates with the communication device. The communication information memory stores unique information that is information for identifying the communication device and communication destination information that is information for communicating with the communication device. Further, the server device transmits communication destination information corresponding to the unique information of the second communication device received from the first communication device to the first communication device.

In a program readable for a computer, by which the computer executes the communication method of a communication device in a communication system including a server device, the communication method comprises the following steps.
a) Receiving communication destination information that is information for establishing communication with another communication device.
b) Communicating with another communication device by using communication destination information without using the server device.
c) Receiving the input of unique information that is information for identifying another communication device.

Here, in step a), communication destination information corresponding to the unique information is acquired from the server device.

Also, information for establishing communication with the communication device itself is transmitted to the server device. Here, in step a), information for communicating with the communication device itself is acquired as communication destination information.

According to the communication system, communication device, server device, and program as described above, it is possible to provide a communication system that may reduce the volume of communication between server device and Internet.

### BRIEF DESCRIPTION OF THE DRAWINGS

Fig. 1 is a structural diagram of a communication system in the preferred embodiment 1.
Fig. 2 is a flow chart for describing the operation of the first communication device in the preferred embodiment 1.
Fig. 3 shows a table of communication information management in the preferred embodiment 1.
Fig. 4 is a structural diagram of a communication system in the preferred embodiment 2.
Fig. 5 is a flow chart for describing the operation of the second communication device transmitting communication destination information to the server device in the preferred embodiment 2.
Fig. 6 is a flow chart for describing the operation of the server device receiving and registering communication destination information in the preferred embodiment 2.
Fig. 7 shows a table of communication information management in the preferred embodiment 2.
Fig. 8 is a structural diagram of a communication system in the preferred embodiment 3.
Fig. 9 is a flow chart for describing the operation of the first communication device in the preferred embodiment 3.
Fig. 10 is a flow chart for describing the operation of the second communication device in the preferred embodiment 3.
Fig. 11 shows the configuration of a communication system in the conventional technology.
Fig. 12 shows the configuration of a communication system in the conventional technology.
Fig. 13 shows the configuration of a communication system in the conventional technology.

### DETAILED DESCRIPTION OF THE PREERRED EMBODIMENTS

The preferred embodiments of the present invention will be described in detail in the following with reference to the drawings. In the preferred embodiments, a component element and a step in flow charts using the same reference numeral or sign perform the same function. Therefore, the description of component elements and steps already described is sometimes omitted.

### (Preferred Embodiment 1)

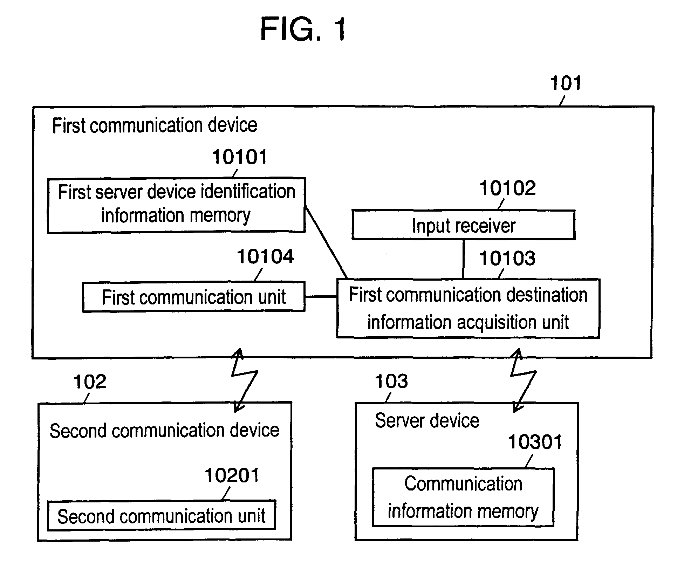

Fig. 1 is a structural diagram of a communication system related to this preferred embodiment. The communication system includes first communication device 101, second communication device 102, and server device 103. In this communication system, first communication device 101 makes a call to second communication device 102. To make a call is to trigger for starting communication and to execute pre-processing for communication.

First communication device 101 includes first server device identification information memory 10101, input receiver 10102, first communication destination information memory 10103, and first communication unit 10104.

First server device identification information memory 10101 stores server device identification information that is information for accessing to server device 103. The server device identification information may be any information used to gain access to server device 103, for example, an IP address of server device 103 or electronic mail address for information to be received by server device 103. Here, the IP address may be any one of IP address of IP Ver4, IP address of IP Ver6 and the like.

First server device identification information memory 10101 can be realized by non-volatile recording medium or volatile recording medium.

Input receiver 10102 receives the input of unique information of second communication device 102. The unique information is, for example, a telephone number. Also, the unique information may be an electronic mail address, name or nickname of communication destination and the like. Receiving the input of unique information is executed by various methods such as receiving the input of unique information made by ten-key and receiving the input made by menu selection.

Input receiver 10102 may be realized by a keyboard and its driver software or a mouse and its driver software and menu processing software.

When input receiver 10102 receives the input of unique information, first communication destination information acquisition unit 10103 accesses to server device 103 identified by server device identification information and obtains communication identification information to be matched with the unique information, that is, the information forming a pair with the unique information from server device 103. Any algorithm may be used for obtaining communication destination information from server device 103.

First communication destination information acquisition unit 10103 may take communication destination information out of server device 103 by retrieving the information of server device 103.

First communication destination information acquisition unit 10103 may instruct server device 103 to transmit the communication identification information matched with the unique information and to receive the communication destination information transmitted from server device 103 according to the instruction.

First communication identification information acquisition unit 10103 is usually realized by software, but it may be realized by hardware such as an exclusive line.

First communication unit 10104 communicates with second communication device 102 by using communication destination information obtained by first communication destination information acquisition unit 10103 without communicating via server device 103.

Second communication device 102 includes second communication unit 10201.

Second communication unit 10201 establishes communicates with first communication device 101 without communicating via the server device.

First communication unit 10104 and second communication unit 10201 can be realized by a both-directional wireless or cable communication device.

Server device 103 includes communication information memory 10301.

Also, server device 103 includes a communication unit and a control unit being not shown. The communication unit communicates with the communication device (the second communication device in this preferred embodiment). The control unit controls the server device.

Communication information memory 10301 stores unique information that is information for identifying second communication device 102 and communication information having communication destination information that is information for communicating with second communication device 102. Communication information is, for example, an IP address. Also, an IP address may be any one of IP address of IP Ver4, IP address of IP Ver6 and the like.

Communication information storage 10301 can be realized by non-volatile recording medium or volatile recording medium.

The operation of this communication system will be described in the following.

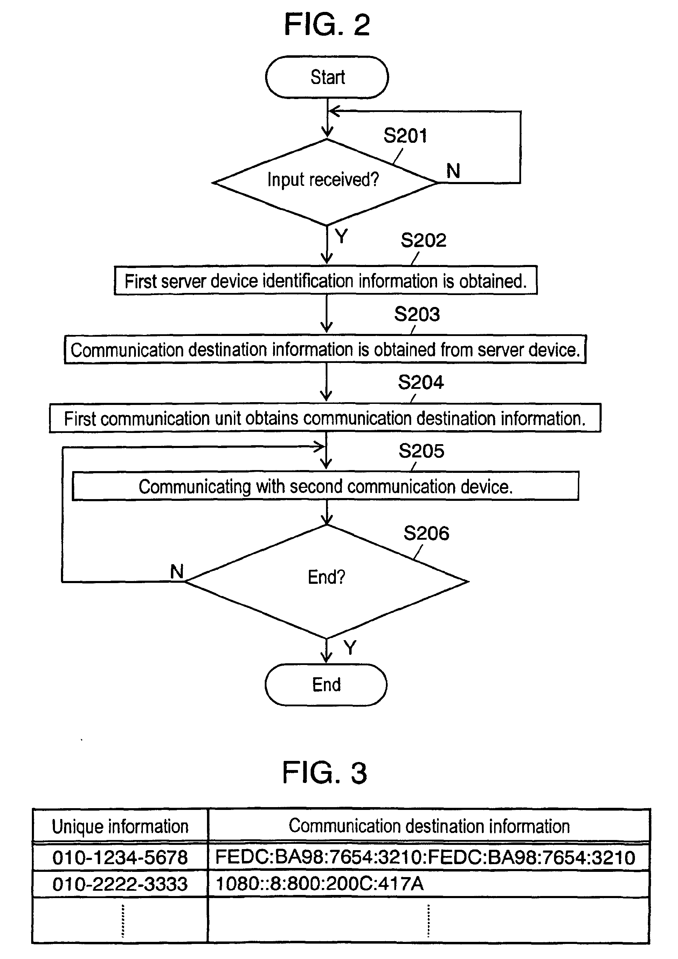

First, the operation of first communication device 101 is described by using the flow chart of Fig. 2.

(Step S201) It is judged whether input receiver 10102 has received the input of unique information of second communication device 102. In case it has received the input of unique information, it goes to step S202, and if it has not received the input of unique information, then step S201 is repeated.

(Step S202) First communication destination information acquisition unit 10103 acquires the first server device identification information stored in first server device identification information memory 10101.

(Step S203) First communication destination information acquisition unit 10103 accesses the sever device identified by the first server identification information acquired in step S202 and obtains communication destination information according to the unique information received in step S201.

(Step S204) First communication unit 10104 obtains communication destination information acquired in step S203.

(Step S205) First communication unit 10104 communicates with second communication device 102. To establish the communication, a call is established as initial processing, and a process is executed to attain a status that enables communication. After the initial processing is once made, the information is transmitted and received in both directions.

(Step S206) First communication unit 10104 judges whether input receiver 10102 or first communication unit 10104 has received a termination signal. In case it has received a termination signal, the step is terminated, and if it has not received a termination signal, then the process returns to step S205. If it returns to step S205 in a state of communication, initial processing will not be executed.

In the flow chart of Fig. 2, unique information received by input receiver 10102 is the unique information of second communication device 102 in the above description. It is intended to make the description easier in the preferred embodiment.

Unique information received by input receiver 10102 may be any information provided that it is the unique information of the counterpart to communicate with.

The operation of second communication device 102 is described in the following.

Second communication device 102 communicates with first communication device 101. In detail, it responds to the request for communication from first communication device 101 and opens a call to enter into a state of communication. After entering into a state of communication, second communication device 102 transmits and receives information to and from first communication device 101 in both directions.

As for second communication device 102, in the configuration of Fig. 1, shown is only the function of receiving a request for communication from first communication device 101 and communicating with first communication device 101.

However, the configuration of second communication device 102 of Fig. 1 is a simplified configuration for making easier the description of the preferred embodiment. That is, second communication device 102 usually includes a configuration similar to that of first communication device 101. Therefore, the communication can be started by designating the counterpart from second communication device 102.

That is, second communication device 102 also may include an input receiver, a server device identification information memory equivalent to the first server device identification information memory, and a communication destination information acquisition unit equivalent to the first communication destination information acquisition unit.

The operation of server device 103 is described in the following.

Server device 103 gives communication destination information to first communication device 101 according to the request from first communication device 101. Any algorithm may be employed for giving communication destination information to first communication device 101. For example, server device 103 receives a communication destination information transmitting command from first communication device 101. The transmitting command includes unique information. Here, server device 103 retrieves communication destination information to be a pair with the unique information. Further, server device 103 transmits communication destination information to first communication device 101.

The operation of the communication system in this preferred embodiment is specifically described in the following.

Here, the first communication device and the second communication device are mobile portable telephones.

The server device stores communication information shown in Fig. 3. Fig. 3 is a table of communication information management.

In Fig. 3, unique information is a telephone number, and communication destination information is an IP address of IP Ver6.

Also, assume that unique information of the second communication device is "010-2222-3333." That is, the second communication device is IP telephone using Internet.

The second communication device moves, and the communication destination information of the second communication device changes according to the movement. Assume that the communication destination information changed in accordance with the movement of the second communication device is "1080::8:800:200C:417A." Here, "1080::8:800:200C:417A." is a representation using the abbreviation of IP address of IP Ver6.

Also, an example of algorithm for providing the server device with communication destination information changed in accordance with the movement of the second communication device will be described in the preferred embodiment 2. Here, any algorithm is preferable for providing the server device with communication destination information changed in accordance with the movement of the second communication device.

In such a case, the user of the first communication device inputs the telephone number "1010-2222-3333" to the first communication device to speak with the user of the second communication device.

Next, the first communication device receives the input of telephone number "010-2222-3333", and obtains server device identification information for identifying the server device from the first server device identification information memory. Here, the first server device identification information memory stores an IP address "24FE:1:503::4" (abbreviated expression in IP Ver6) assigned to the server device.

Next, the first communication device obtains an IP address "24FE:1:503::4" from the first server device identification information memory.

Subsequently, the first communication device transmits a sending command for transmitting communication destination information to the server device identified by an IP address "24FE:1:503::4". The sending command includes the telephone number "010-2222-3333."

Next, the server device receives the sending command.

Subsequently, the server device fetches telephone number "010-2222-3333" included in the sending command.

Next, the server device fetches communication destination information to be matched with the telephone number "010-2222-3333." That is, the server device obtains communication destination information "1080::8:800:200C:417A" to be matched with the telephone number "010-2222-3333" from the table of communication information management of Fig. 3.

Next, the server device transmits communication destination information "1080::8:800:200C:417A" to the first communication device.

Subsequently, the first communication device receives communication destination information "1080::800:200C:417A."

Next, the first communication device makes a call to the second communication device identified by communication destination information "1080::8:800:200C:417A."

The second communication device receives a request for communication from the first communication device, then a call is established between both communication devices, and the bidirectional communication is started between both communication devices.

Thus, bidirectional communication, that is, a talk by telephone is established until a communication ending signal is input from either the user of the first communication device or the user of the second communication device.

As described above, according to the present preferred embodiment, in communication with a mobile communication device, it enables the bidirectional communication and prevents the traffic of network from becoming too much expanded.

Specifically, it is possible to greatly reduce the number of communications and the amount of communication data between the server that manages the communication destination information of mobile communication device and Internet, thereby preventing the increase of traffic.

In the present preferred embodiment, communication destination information has been described by using an IP address of IP Ver6 as an example, but the communication destination information used may be any information for establishing communication with a communication device such as an IP address of IP Ver4. The same holds true in other preferred embodiments.

Also, in the present preferred embodiment, the unique information has been described by using a telephone number as an example, but the unique information may be information such as the nickname of the user of the communication device. The same holds true in other preferred embodiments.

Also, in the present preferred embodiment, any algorithm is preferable for the first communication device to obtain communication destination information. The same holds true in other preferred embodiments.

Further, regarding the operation of the first communication device, the second communication device and the server device described in the present preferred embodiment, the operation may be realized with use of software.

By putting the software on a server for example, it may be used to distribute the software by software download. Further, it may be performed to distribute the software recorded in a recording medium such as CD-ROM. The same holds true in all the preferred embodiments.

### (Preferred Embodiment 2)

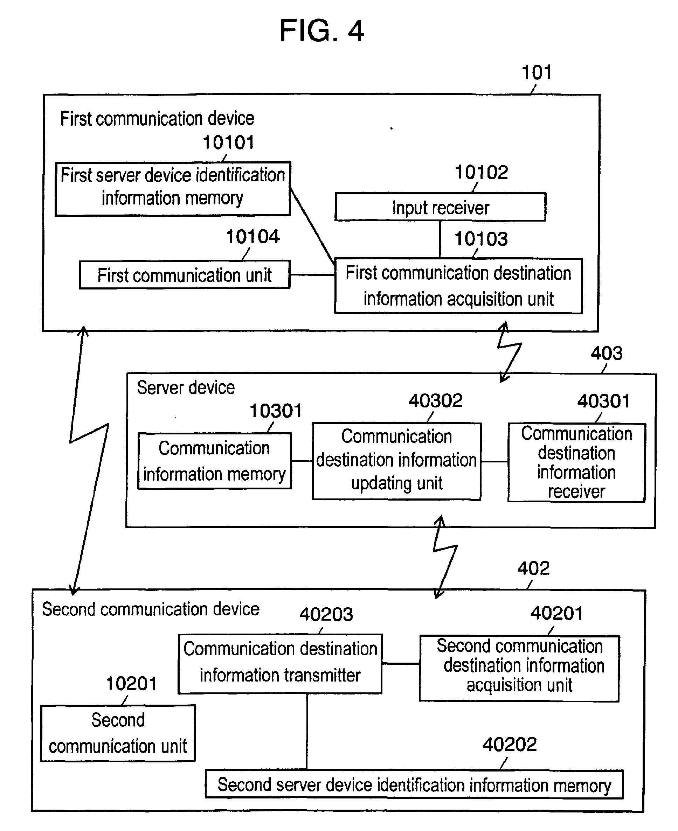

Fig. 4 is a structural diagram of a communication system in this preferred embodiment. The communication system includes first communication device 101, second communication device 402, and server device 403. In this communication system, a call is made from first communication device 101 to second communication device 402.

Second communication device 402 includes second communication unit 1020, second communication destination information acquisition unit 40201, second server device identification information memory 40202, and communication destination information transmitter 40203.

Second communication destination information acquisition unit 40201 acquires communication destination information that is information for establishing communication with second communication device 402.

Any method is preferable for second communication destination information acquisition unit 40201 to obtain communication destination information.

Second communication destination information acquisition unit 40201 receives, for example, communication destination information from an external device of a wireless communication base station. The way of realizing second communication destination information acquisition unit 40201 varies with the method of acquiring communication destination information. Second communication destination information acquisition unit 40201 is, for example, realized by a wireless communication device.

Second server device identification information memory 40202 stores server device identification information that is information for accessing to server device 403. Any server device identification information is preferable, if the information is for accessing to server device 403. Server device identification information is, for example, the IP address of server device 403 or an electronic mail address for delivering the information to server device 403. Also, the IP address may be any address such as an IP address of IP Ver4 or an IP address of IP Ver6.

Second server device identification information memory 40202 can be realized by non-volatile recording medium or volatile recording medium.

Communication destination information transmitter 40203 transmits communication destination information acquired by second communication destination information acquisition unit 40201 to server device 403 identified by server device identification information. Communication destination information transmitter 40203 can be usually realized by a wireless communication device.

Here, second communication unit 10201 usually has a function of receiving communication destination information from a wireless communication base station.

In second communication device 402, it is preferable to realize second communication unit 10201, second communication destination information acquisition unit 40201, and communication destination information transmitter 40203 with physically one wireless communication device.

Second communication device 402 has been described above, but as described in the preferred embodiment 1, first communication device 101 may be configured in the same structure as second communication device 402. Accordingly, first communication device 101 may have the same functions as those of second communication device 402. Here, first communication destination acquisition unit 10103 and second communication destination acquisition unit 40202 acquire communication destination information that is information for communicating with the communication device itself, and also acquire communication destination information of the communication counterpart from server device 403.

Also, second communication device 402, as described in the preferred embodiment 1, may include an input receiver.

Server device 403 includes communication information memory 10301, communication destination information receiver 40301, and communication destination updating unit 40302. That is, communication destination information receiver 40301 and communication destination information updating unit 40302 are added to the configuration of the preferred embodiment 1.

Communication destination information receiver 40301 receives communication destination information from second communication device 402. Communication destination information receiver 40301 can be realized by a wireless or cable communication device.

Communication destination information updating unit 40302 registers the communication destination information received by communication destination information receiver 40301 as updated communication destination information of communication information memory 10301. Here, to register means, for example, overwriting the received communication destination with respect to communication destination information stored in communication information memory 10301. Communication destination information updating unit 40302 can be usually realized by software, but it may be realized by using hardware such as an exclusive circuit.

The operation of the communication system will be described in the following.

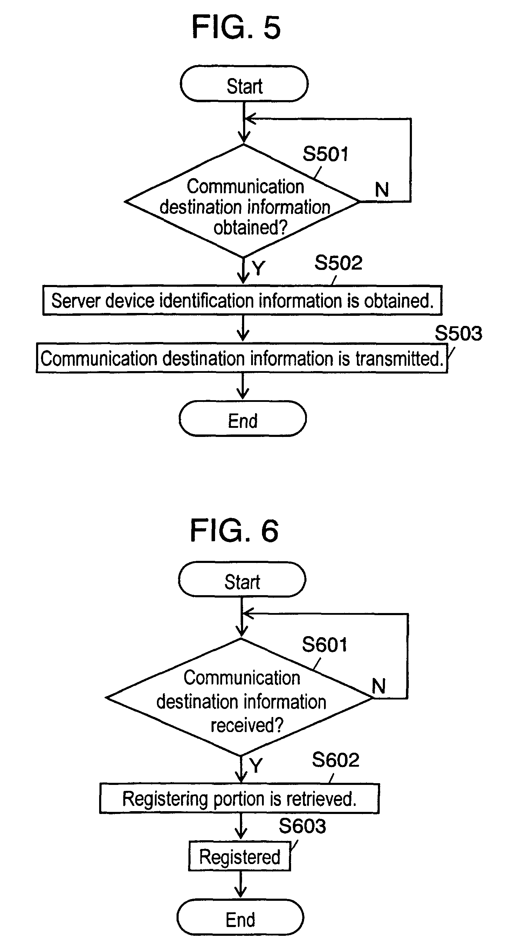

First, the operation of second communication device 402 for transmitting communication destination information to server device 403 is described by using the flow chart of Fig. 5.

(Step S501) It is judged whether second communication destination information acquisition unit 40201 has acquired the communication destination information of second communication device 402 itself. In case it has acquired the communication destination information, it goes to step S502, and if it has not acquired the communication destination information, then step S501 is repeated.

(Step S502) Communication destination information transmitter 40203 takes out server device identification information from second server device identification information memory 40202.

(Step S503) Communication destination information transmitter 40203 transmits communication destination information obtained in step S501 to the server device identified by server device identification information fetched in step S502.

In the flow chart of Fig. 5, with communication destination obtained, the communication destination is always transmitted to the server device.

Also, the second communication device judges whether the communication destination information of the second communication device itself is changed, and only when changed, the second communication device may transmit the communication destination information to the server device. In that case, second communication device 402 is configured as described in the following.

Further, there is provided a change detector not shown which detects the change of communication destination information that is information for communicating with second communication device 402. Communication destination information transmitter 40203 transmits communication destination information to server device 403 when the change detector detects the change of communication destination information.

Also, in the flow chart of Fig. 5, nothing is mentioned about a case that communication destination information is obtained, but communication destination information may be acquired periodically. Also, only when communication destination information is changed due to a movement of the second communication device, communication destination information may be acquired by transmitting communication destination information from a base station or the like to the second communication device.

Further, communication destination information transmitter 40203 usually transmits unique information of second communication device 402 together with communication destination information to server device 403. Server device 403 rewrites the communication information that corresponds, that is, matches with the unique information.

Next, the operation of server device 403 for receiving and registering communication destination information will be described by using the flow chart of Fig. 6.

(Step S601) It is judged whether communication destination information receiver 40301 has received communication destination information. In case it has received communication destination information, it goes to step S602, and if it has not received communication destination information, then step S601 is repeated.

(Step S602) Communication destination information updating unit 40302 retrieves the portion of registering the communication destination information received in step S601. The registering portion exists in communication information memory 10301. Here, retrieving the registering portion means, for example, executing the following processing.

Communication destination information receiver 40301 receives, for example, the communication destination information and the unique information of second communication device 402 in the form of a pair. Further, communication destination information updating unit 40302 obtains communication information including communication destination information, by using the received unique information as a key.

(Step S603) Communication destination information updating unit 40302 registers the communication destination information received in step S601 in the registering portion retrieved in step S602.

The operation of the communication system in the present preferred embodiment will be specifically described in the following.

Here, the first communication device and the second communication device are mobile portable telephones.

The server device stores communication information shown in Fig. 3. Also, assume that unique information of the second communication device is "010-2222-3333." That is, the second communication device is an IP telephone using Internet.

Here, the second communication device moves, and the communication destination information of the second communication device changes according to the movement. Assume that the communication destination information of the second communication device changed in accordance with the movement of the second communication device is "1080::5:2A11:11DE:555C."

The second communication device receives, for example, an IP address "1080::5:2A11:11DE:555C" assigned to the second communication device from a wireless communication base station of the destination. Then, the second communication device transmits the received IP address "1080::5:2A11:11DE:555C" to the server device. In transmission, the second communication device also transmits its unique information "010-2222-3333" to the server device.

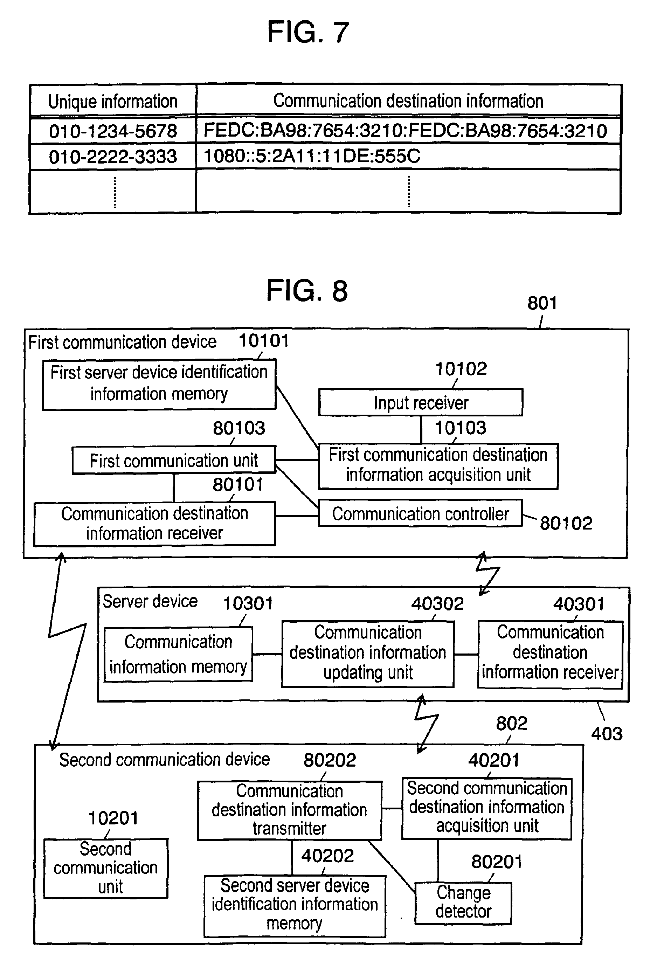

The server device receives the IP address "1080::5:2A11:11DE:555C" and the unique information "010-2222-3333" from the second communication device. Subsequently, the server device changes communication destination information corresponding to the unique information "010-2222-3333" of the table (communication information management table) for the management of communication information of Fig. 3 into "1080::5:2A11:11DE:555C." As a result, the communication information management table becomes as shown in Fig. 7.

The second communication device may transmit communication destination information to the server device when the change of the communication destination information is detected by the change detector. Also, the second communication device may always transmit communication destination information to the server device when it acquires communication destination information.

Also, the server device may always register the communication destination information received from the second communication device. Also, the server device compares the communication destination information stored in the communication information memory with the communication destination information, and there is a difference between the two, to the server device may register the communication destination information received.

As described above, according to the present preferred embodiment, in communication with a mobile communication device, it is possible to make bidirectional communication in both directions and to prevent the traffic of network from becoming too much expanded. In addition, the server device receives communication destination information from the second communication device which are moving, and the server device is always able to maintain the communication destination information of the place at which the second communication device moves. Accordingly, wherever the second communication device moves, the first communication device is able to properly establish communication with the second communication device.

### (Preferred Embodiment 3)

Fig. 8 is a structural diagram of a communication system in this preferred embodiment.

The communication system includes first communication device 801, second communication device 802, and server device 403. In this communication system, a call is made from first communication device 801 to second communication device 802.

Server device 403 is configured in the same structure as in the preferred embodiment 2.

First communication device 801 includes first server device identification information memory 10101, input receiver 10102, first communication destination information acquisition unit 10103, first communication unit 80103, communication destination information receiver 80101, and communication controller 80102.

Communication destination information receiver 80101 receives communication destination information from second communication device 802 during the communication with second communication device 802. Communication destination information receiver 80101 is usually realized by a wireless communication device.

Communication controller 80102 instructs first communication unit 10104 to change over the destination to the destination shown by the received communication destination information when communication destination information receiver 80101 receives new communication destination information. Communication controller 80102 can be usually realized by software, but it may be realized by hardware (an exclusive circuit).

First communication unit 80103 establishes communication with second communication device 802. Also, when new communication destination information is received from communication controller 80102 during the communication, the communication is made by changing it over to the destination shown by the new communication destination information. First communication unit 80103 can be usually realized by wireless communication device. First communication unit 80103 includes software or the like for communicating by changing it over to the destination shown by the new communication destination information.

Second communication device 802 includes second communication unit 10201, second communication destination information acquisition unit 40201, second server device identification information memory 40202, change detector 80201, and communication destination information transmitter 80202.

Change detector 80201 detects that the change of the communication destination information of second communication device 802 itself. Any method for detecting the change may be employed. Change detector 80201 receives communication destination information from a base station for wireless communication, for example, only when the communication destination information of second communication device 802 itself is changed. Also, change detector 80201 receives communication destination information from a wireless communication base station for example periodically or at all times, and compares the last communication destination information being stored with the communication destination information received, and if both do not coincide with each other, it is judged that the communication destination information is changed.

Change detector 80201 is usually realized by software, but it may be realized by hardware.

Here, second communication unit 10201 usually has a function of receiving communication destination information from a wireless communication base station.

Communication destination information transmitter 80202 transmits communication destination information acquired by second communication destination information acquisition unit 40201 to first communication device 801 when the change of communication destination information is detected by change detector 80201 during communication with first communication device 801.

Also, communication destination information transmitter 80202 transmits the communication destination information acquired by second communication destination information acquisition unit 40201 to server device 403 as well, when change detector 80201 detects the change of communication destination information. Since second communication device 802 and first communication device 801 are communicating with each other, communication destination information transmitter 80202 is able to transmit the new communication destination information to first communication device 801.

Also, the server device identification information of server device 403 is obtained from second server device identification information memory 40202.

Communication destination information 80202 is usually realized by a wireless communication device.

The operation of the communication system will be described in the following.

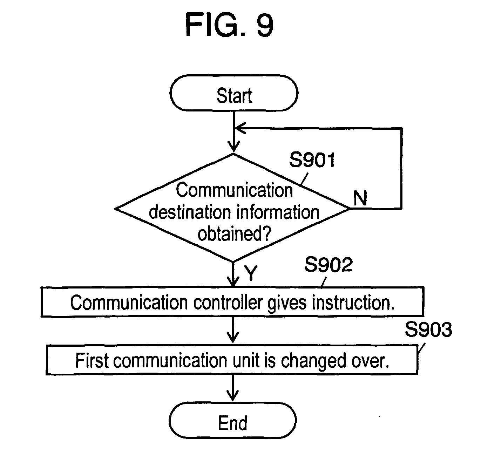

First, the operation of first communication device 801 is described by using the flow chart of Fig. 9.

Here, first communication device 801 obtains communication destination information of second communication device 802 from second communication device 802 during communication with second communication device 802. Thus, the communication is continued between first communication device 801 and second communication device 802.

The operation of first communication device 801 for starting communication with second communication device 802 is preformed in the same manner as the operation described by using the flow chart of Fig. 2, and the description is omitted.

(Step S901) Communication destination information receiver 80101 judges whether it has received communication destination information from second communication device 802 during the communication with second communication device 802. In case it has received communication destination information, it goes to step S902, and if it has not received communication destination information, then step S901 is repeated.

(Step S902) Communication controller 80102 instructs first communication unit 10104 to change over the destination to the destination shown by the communication destination information received.

(Step S903) First communication unit 80103, during communication with second communication device 802, changes over the communication destination information of second communication device 802 to new communication destination information in order to continue the communication with second communication device 802.

Such processing is usually executed according to the following procedure.

First communication unit 80103 finishes calling to second communication device 802 shown by the previous communication destination information, and makes a call to second communication device 802 shown by the new communication destination information to resume the communication with second communication device 802. That is, first communication unit 80103 immediately resumes the communication after once finishing communication. Because the processing speed is very fast, the users of first communication device 801 and second communication device 802 will feel like that the communication is made continuously.

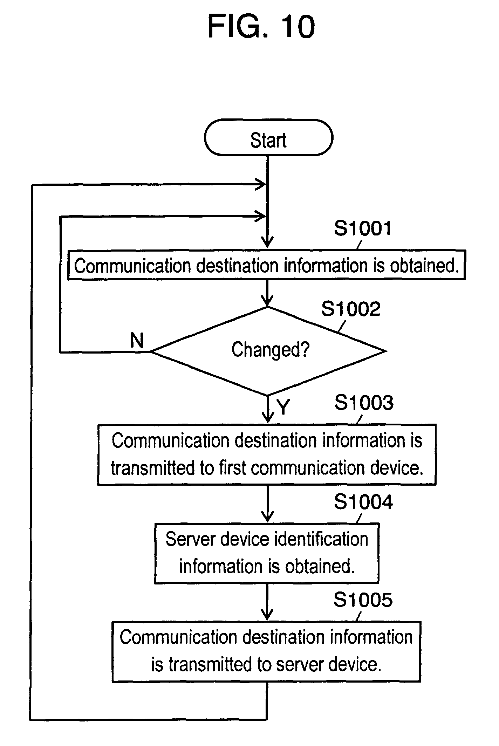

Next, the operation of second communication device 802 will be described by using the flow chart of Fig. 10.

Here, second communication device 802 transmits communication destination information to first communication device 801 during communication with first communication device 801. Thus, the communication is continued between first communication device 801 and second communication device 802.

(Step S1001) Second communication destination information acquisition unit 40201 acquires communication destination information of second communication device 802 itself. Any method is preferable for second communication destination information acquisition unit 40201 to obtain communication destination information. For example, second communication destination information acquisition unit 40201 periodically receives communication destination information from a wireless communication base station located in the neighborhood.

(Step S1002) Change detector 80201 compares the latest communication destination information with communication destination information received in step S1001, and judges whether the communication destination information of second communication device 802 is changed.

In case the communication destination information is changed, the process goes to step S1003, and if the communication destination information is not changed, then it returns to step S1001.

Here, second communication device 802 always stores the latest communication destination information (current communication destination information). That is, second communication device 802 records the new communication destination information as the current communication destination information when the communication destination information is changed.

(Step S1003) Communication destination information transmitter 80202 transmits the communication destination information acquired in step S1001 to first communication device 801. Second communication device 802 is able to transmit the communication destination information because second communication device 802 are communicating with first communication device 801.

(Step S1004) Communication destination information transmitter 80202 obtains server device identification information from second server device identification information memory 40202.

(Step S1005) Communication destination information transmitter 80202 transmits the communication destination information obtained in step S1001 to server device 403 identified by the server device identification information obtained in step S1004.

After that, the process returns to step S1001.

In the flow chart of Fig. 10, when second communication device 802 has received a termination signal, the operation is terminated because of interruption.

Also, in the flow chart of Fig. 10, change detector 80201 detects the change of communication destination information.

Also, communication destination information may be processed in the following way.

Only when the communication destination information of second communication device 802 changes, second communication device 802 obtains communication destination information from the outside. In that case, second communication device 802 may transmit communication destination information to first communication device 801 and server device 403 without making any judgment.

Further, in the flow chart of Fig. 10, when first communication device 801 and second communication device 802 are communicating with each other, second communication device 802 transmits new communication destination information to server device 403. Also, after the termination of communication, second communication device 802 may transmit new communication destination information to server device 403.

First communication device 801 and second communication device 802 have been described above.

As described in the preferred embodiments 1 and 2, first communication device 801 and second communication device 802 may have the same configuration.

Accordingly, first communication device 801 may further include a communication destination information transmitter equivalent to communication destination information transmitter 80202 and a change detector equivalent to change detector 80201.

Also, second communication device 802 may further include an input receiver equivalent to input receiver 10102, a communication destination information receiver equivalent to communication destination information receiver 80101, and a communication controller equivalent to communication controller 80102.

The operation of the communication system in the present preferred embodiment will be specifically described in the following.

Here, the first communication device and the second communication device are mobile portable telephones.

The server device stores communication information shown in Fig. 3.

Assume that the unique information of the second communication device is "010-2222-3333." That is, the second communication device operates as an IP telephone using Internet.

Here, assume that the first communication device and the second communication device are communicating with each other, and that the second communication device moves. The communication destination information of the second communication device changes in accordance with the movement of the second communication device. Suppose that the communication destination information of the second communication device changed in accordance with the movement is "1080::5:2A11:11DE:555C." The second communication device for example receives IP address "1080::5:2A11:11DE:555C" assigned to the second communication device from a wireless communication base station of the area to which the second communication device has moved. Subsequently, the second communication device transmits the received IP address "1080::5:2A11:11DE:555C" to the first communication device with which it is communicating. Also, the second communication device transmits the received IP address "1080::5:2A11:11DE:555C" to the server device as well.

The first communication device receives a new IP address of the second communication device, and changes over the destination to the new IP address "1080::5:2A11:11DE:555C" to continue the communication.

Also, the server device changes the communication information management table to the one shown in Fig. 7 as described in the preferred embodiment 2.

As described above, according to the present preferred embodiment, in communication with a mobile communication device, it is possible to establish communicate in both directions. Also, it is possible to prevent the traffic of network from becoming too much expanded. Further, even when communication destination is changed due to the movement of the communication device, a state of stable communication can be continuously obtained.

### INDUSTRIAL APPLICABILITY

According to the present invention, the amount of communication traffic between server device and Internet can be reduced, and it is possible to provide a communication system being free from problems such as congestion.

### Reference marks in the drawings

101, 801, 1101 First communication device
102, 402, 802, 1102 Second communication device
103, 403, 1103, 1203, 1304 Server device
10101 First server device identification information memory
10102 Input receiver
10103 First communication destination information acquisition unit
10104, 80103 First communication unit
10201 Second communication unit
10301 Communication information memory
40201 Second communication destination information acquisition unit
40202 Second server device identification information memory
40203 Communication destination information transmitter
40301, 80101 Communication destination information receiver
80302 Communication destination information updating unit
80102 Communication controller
80201 Change detector
80202 Communication destination information transmitter

## Claims

1. A communication system, comprising:
a first communication device,
a second communication device communicating with the first communication device, and
a server device being accessed by the first communication device,
wherein the server device includes:
a communication information memory for storing unique information that is information for identifying the second communication device and communication destination information that is information for communicating with the second communication device, and
the first communication device includes:
a first server device identification information memory for storing server device identification information that is information for accessing the server device,
an input receiver for receiving an input of the unique information,
a first communication destination information acquisition unit which accesses to the server device identified by the server device identification information to acquire the communication destination information corresponding to the unique information from the server device, when the input receiver receives the input of the unique information,
a first communication unit which communicates with the second communication device by using the communication destination information, and
the second communication device includes:
a second communication unit which communicates with the first communication device without using the server device.

2. The communication system of claim 1,
wherein the second communication device further includes:
a second communication destination information acquisition unit which acquires another communication destination information for establishing communication with the second communication device,
a second server device identification information memory which stores the server device identification information, and
a communication destination information transmitter which transmits the another communication destination information acquired by the second communication destination information acquisition unit to a server device identified by the server device identification information, and
the server device further includes:
a communication destination information receiver which receives the another communication destination information from the second communication device, and
a communication destination information updating unit which registers the another communication destination information as updated communication destination information in the communication information memory.

3. The communication system of claim 2,
wherein the second communication device further includes:
a change detector for detecting that the another communication destination information is changed, and
the communication destination information transmitter transmits the changed another communication destination information to the server device when the change of the other communication destination information is detected by the change detector.

4. The communication system of claim 1,
wherein the second communication device further includes:
a second communication destination information acquisition unit which acquires another communication information that is information for communicating with the second communication device,
a change detector for detecting that the another communication destination information is changed, and
a communication destination information transmitter which transmits the changed another communication destination information to the first communication device when the change of the another communication destination information is detected by the change detector during communication with the first communication device, and
the first communication device further includes:
a communication destination information receiver which receives the changed another communication destination information during communication with the second communication device, and
when the another communication destination information is changed, communication is continued between the first communication device and the second communication device.

5. The communication system of claim 1,
wherein the communication destination information is an IP address.

6. The communication system of any one of claim 2 to claim 4,
wherein the communication destination information is an IP address and the another communication destination information is an IP address.

7. A communication device to be used for a communication system including a server device including:
a server device identification information memory which stores server device identification information that is information for accessing the server device,
an input receiver which receives an input of unique information that is information for identifying another communication device,
a communication destination information acquisition unit which gains access to a server device identified by the server device identification information when the input of the unique information is received by the input receiver, and acquires communication destination information that is information for communicating with the another communication device corresponding to the unique information from the server device, and
a communication unit for communicating with the another communication device by using the communication destination information without using the server device.

8. The communication device of claim 7, further comprising:
a communication destination information receiver which receives another communication destination information of the another communication device during communication with the another communication device,
wherein the communication with the another communication device is continued when the another communication destination information of the another communication device is changed.

9. The communication system of claim 7,
wherein the communication destination information is an IP address.

10. The communication system of claim 8,
wherein the communication destination information is an IP address and the another communication destination information is IP address.

11. A communication device to be used for a communication system including a server device, comprising:
a communication unit for communicating with another communication device,
a communication destination information acquisition unit which acquires communication destination information that is information for establishing communication with the another communication device,
a server device identification information memory which stores server device identification information for identifying the server device,
a communication destination information transmitter which transmits the communication destination information acquired by the communication destination information acquisition unit to the server device identified by the server device identification information.

12. The communication device of claim 11, further comprising:
a change detector for detecting that the communication destination information is changed,
wherein the communication destination information transmitter transmits the changed another communication destination information to the server device when the change of the another communication destination information is detected by the change detector.

13. The communication device of claim 11, further comprising:
a change detector for detecting that the communication destination information is changed, and
a communication destination information transmitter which transmits the changed communication destination information to the another communication device when the change of the communication destination information is detected by the change detector during communication with the another communication device,
wherein communication with the another communication device is continued when the communication destination information is changed.

14. The communication device of any one of claim 11 to claim 13,
wherein the communication destination information is an IP address.

15. A sever device used in a communication system, comprising:
a communication unit for communicating with a communication device, and
a communication information memory which stores unique information that is information for identifying the communication device, and communication destination information that is information for communicating with the communication device,
wherein the server device transmits communication destination information corresponding to unique information of a second communication device received from a first communication device to the first communication device.

16. The server device of claim 15, further comprising:
a communication destination information receiver which receives communication destination information of the second communication device from the second communication device, and
a communication destination information updating unit which updates the communication destination information of the second communication device stored in the communication information memory when the communication destination updating unit receives the communication destination information of the second communication device.

17. The server device of any one of claim 15 and claim 16,
wherein the communication destination information is IP address.

18. A program that is readable for a computer to execute a communication method of a communication device in a communication system including a server device,
wherein the communication method includes the steps of:
a) receiving communication destination information that is information for communicating with another communication device, and
b) communicating with the another communication device by using the communication destination information without using the server device.

19. The program of claim 18,
wherein the communication method further includes the step of:
c) receiving the input of unique information that is information for identifying the another communication device, wherein
in step a), the communication destination information corresponding to the unique information is obtained from the server device.

20. The program of claim 18,
wherein the communication method further includes the step of:
d) transmitting information for communicating with the communication device itself to the server device, and
in step a), the information for communicating with the communication device itself is obtained as the communication destination information.
